# EUROPÄISCHE PATENTSCHRIFT

(11) **EP 1 278 968 B1**
(45) Veröffentlichungstag und Bekanntmachung des Hinweises auf die Patenterteilung: **24.01.2007**
(21) Anmeldenummer: 01940380.7
(22) Anmeldetag: 28.04.2001
(51) Int. Cl.: F16D 23/06, F16H 57/02

(54) **SCHALTEINRICHTUNG FÜR EIN GETRIEBE MIT ZWEI VORGELEGEWELLEN**
SHIFTING DEVICE FOR A TRANSMISSION COMPRISING TWO LAYSHAFTS
DISPOSITIF DE COMMUTATION POUR TRANSMISSION A DEUX ARBRES INTERMEDIAIRES

(30) Priorität: 04.05.2000 DE 10021761
(43) Veröffentlichungstag der Anmeldung: 29.01.2003
(73) Patentinhaber: ZF FRIEDRICHSHAFEN Aktiengesellschaft, 88038 Friedrichshafen (DE)
(72) Erfinder: BURI, Gerhard, 88677 Markdorf (DE)
(86) Internationale Anmeldenummer: PCT/EP2001/004814
(87) Internationale Veröffentlichungsnummer: WO 2001/084005

(56) Entgegenhaltungen:
- EP-A- 0 714 802
- DE-A- 19 727 321
- US-A- 3 283 613
- US-A- 3 583 536
- US-A- 5 749 263
- US-A- 5 839 319
- US-A- 5 927 146

## Beschreibung

Die Erfindung betrifft ein Getriebe mit einer Schalteinrichtung und mit Lastverteilung auf zwei Vorgelegewellen nach dem Oberbegriff von Anspruch 1. Aus der US- A - 5839319 ist ein Getriebe mit einer Schalteinuchtung mit der Merkmalen des Oberbegriffes des Anspruches 1 bekannt.

Bei einem Zahnräderwechselgetriebe mit Leistungsteilung auf mehrere Vorgelegewellen, mit einer koaxialen Antriebswelle, die radial und axial gelagert ist, und mit einer Abtriebswelle (Hauptwelle), die schwimmend gelagert ist, wobei mindestens ein auf der Antriebswelle vorgesehenes Antriebszahnrad das Drehmoment auf mit diesem kämmende und fest mit den Vorgelegewellen verbundene Zahnräder weiterleitet, sind die Losräder auf der Antriebs- und Abtriebswelle axial fixiert, radial jedoch frei.
Bei Getrieben dieser Art mit wenigstens zwei Vorgelegewellen wird der Lastausgleich im allgemeinen so gestaltet, daß die Antriebswelle und die Vorgelegewellen starr zum Gehäuse gelagert werden, während die Hauptwelle bzw. Abtriebswelle radial schwimmend in den auf ihr angeordneten Zahnrädern, die sich im Kraftfluß befinden, gelagert wird und nur axial fixiert wird. Grundsätzlich ist jedoch auch die umgekehrte Ausbildung bzw. Wellenführung möglich. Bei Abnahme eines Drehmomentes an nur einer Vorgelegewelle, was üblicherweise beim Anschluß eines Nebenabtriebes der Fall ist, entstehen an einem schrägverzahnten Zahneingriff an der Antriebswelle radiale und axiale Kräfte. Um diese aufnehmen zu können, muß das in Kraftfluß befindliche Zahnrad zur Antriebswelle geführt werden. Alle Losräder auf der Antriebswelle und auf der Abtriebswelle sind nur axial fixiert, radial jedoch frei für einen funktionierenden Lastausgleich. Der notwendige Lastausgleich wird gestört bzw. eine Funktion des Zahnräderwechselgetriebes ist überhaupt nicht möglich, wenn ein asymmetrischer Kraftangriff auftritt. Dies ist z. B. dann der Fall, wenn ein Nebenabtrieb über nur eine Vorgelegewelle erfolgen soll.

Aus der DE 43 05 103 A1 ist eine schaltbare Radialfixierung für ein Konstantenrad bekannt geworden, bei dem die Schalteinrichtung, die das Konstantenrad in den Drehmomentenfluß einschaltet auch eine Vorrichtung für eine radiale Festlegung des geschalteten Konstantenrades beinhaltete. Die Schalteinrichtung läßt jedoch nur eine radiale Fixierung und Benutzung der ersten Konstante zu, weil bei einem Betrieb über die zweite Konstante die Wellendurchbiegung der Antriebswelle zu groß wird.

Der Erfindung liegt die Aufgabe zugrunde, den Antrieb eines Nebenabtriebes über die zweite Konstante zu ermöglichen.

Die Aufgabe wird gelöst durch ein Getriebe mit einer Schalteinrichtung mit den Merkmalen des Anspruchs 1. Ausgestaltungen sind Gegenstand von Unteransprüchen.

Das erfindungsgemäße Getriebe mit ein Schalteinrichtung und mit Lastverteilung auf zwei Vorgelegewellen weist zwei Konstantenradzügen auf. Wenigstens eine der Konstantenradzüge dient der Übertragung von Drehmoment, das in das Getriebe eingeleitetet wird, auf diejenige Vorgelegewelle, an der ein Nebenabtrieb angeordnet ist. Die Schalteinrichtung weist weiterhin eine Synchronisiereinrichtung auf. Die Konstantenradzüge weisen drei Zahnräder auf, von denen zwei auf den Vorgelegewellen angeordnet sind, während das dritte Zahnrad auf der Eingangswelle oder der Hauptwelle des Getriebes axial fixiert aber radial beweglich angeordnet ist. Das nicht auf einer der Vorgelegewellen angeordnete Zahnrad des zweiten Konstantenradzuges ist in radialer Richtung in einer Kupplungseinrichtung derart fixiert, das die Kupp-lungseinrichtung ein radialen Spiel des Zahnrades in bezug auf die Welle zuläßt, auf der das Zahnrad angeordnet ist.

Zwischen der Synchronisiereinrichtung und dem Zahnrad des zweiten Konstantenradzuges, das nicht auf einer der Vorgelegewellen angeordnet ist, eine Kupplung vorgesehen. In einer besonders vorteilhaften Ausgestaltung ist als Kupplung eine Kupplung nach Oldham-Bauart vorsehen.

Wenn von der Eingangswelle des Getriebes das in das Getriebe eingeleitete Drehmoment über die Schalteinrichtung auf das Zahnrad des zweiten Konstantenradzuges geschaltet wird, das nicht auf einer der Vorgelegewellen montiert ist, so stützen sich die beiden Zahnflanken der jeweils eingreifenden Zähne auf den Zahnflanken der entsprechenden Gegenzahnräder der Vorgelegewellen ab. Durch die radiale Fixierung des Zahnrades des zweiten Konstantenradzuges in der Kupplungseinrichtung kann das Zahnrad radial nicht mehr ausweichen. Das Zahnrad des ersten Konstantenradzuges, das nicht auf den Vorgelegewellen angeordnet ist, bildet durch seine radiale Lagerung ein Koppelglied zwischen den beiden Vorgelegewellen und ergibt dadurch eine formschlüssige Rückkopplung von der Vorgelegewelle, an der der Nebenabtrieb angeschlossen ist, auf die gegenüberliegende und bisher unbelastete Vorgelegewelle. Infolge dieser Rückkopplung werden die Zahnkräfte des Zahnrades des zweiten Konstantenradzuges auf beide Vorgelegewellen je zur Hälfte verteilt und über den ersten Konstantenradzug wieder zurückgeführt auf die Vorgelegewelle, an der der Nebenabtrieb angeschlossen ist. Damit steht an der Vorgelegewelle, an der der Nebenabtrieb angeschlossen ist, das volle Drehmoment zur Verfügung.

In einer Ausführungsform sind an dem Zahnrad des zweiten Konstantenradzuges Mitnehmer-Nasen vorgesehen, die in Gleitsteine an der Kupplung nach Oldham-Bauart eingreifen und in einer Ausgestaltung sind auch an einem Kupplungskörper der Synchronisiereinrichtung Mitnehmer-Nasen angeordnet, die in Gleitsteine an der Kupplung nach Oldham-Bauart eingreifen. In einer weiteren vorteilhaften Ausführungsform ist zwischen der Synchronisiereinrichtung und dem Zahnrad des zweiten Konstantenradzuges, das nicht auf einer der Vorgelegewellen angeordnet ist, ein Scheibengelenk vorgesehen. In einer Ausführungsform sind an dem Zahnrad des zweiten Konstantenradzuges Mitnehmer-Nasen vorgesehen, die in Scheiben und Kettenglieder des Scheibengelenks eingreifen und in einer Ausgestaltung sind auch an einem Kupplungskörper der Synchronisiereinrichtung Mitnehmer-Nasen angeordnet, die in die Scheiben und Kettenglieder des Scheibengelenks eingreifen. In einer Ausführung ist die Synchronisiereinrichtung als eine Bolzensynchronisierung vorgesehen und die Kupplungsverzahnung zwischen der Bolzensynchronisierung und dem Zahnrad des zweiten Konstantenradzuges, das nicht auf einer der Vorgelegewellen angeordnet ist, ist derart ausgebildet, daß die Stellungsungenauigkeiten zwischen den Verzahnungen der ersten und zweiten Konstanten ausgeglichen werden. Eine vorteilhafte Ausführungsform weist ein nadelgelagertes Zahnrad des ersten Konstantenradzuges, das nicht auf einer der Vorgelegewellen angeordnet ist, auf der Eingangswelle auf.

Die Erfindung wird anhand einer Zeichnung näher erläutert.

Es zeigen:
- Fig. 1: einen Schnitt durch eine Schalteinrichtung mit Oldham-Kupplung;
- Fig. 2: einen Schnitt nach Fig. 1;
- Fig. 3: eine Schalteinrichtung mit Bolzen-Synchronisierung;
- Fig. 4: eine Darstellung des Drehmomentflusses und
- Fig. 5: ein Scheibengelenk.

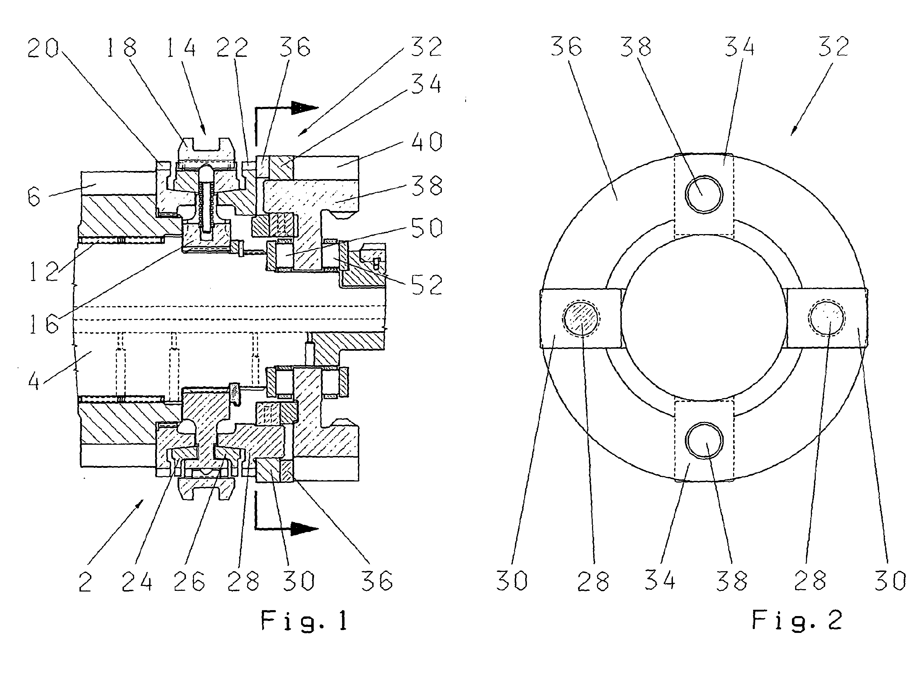

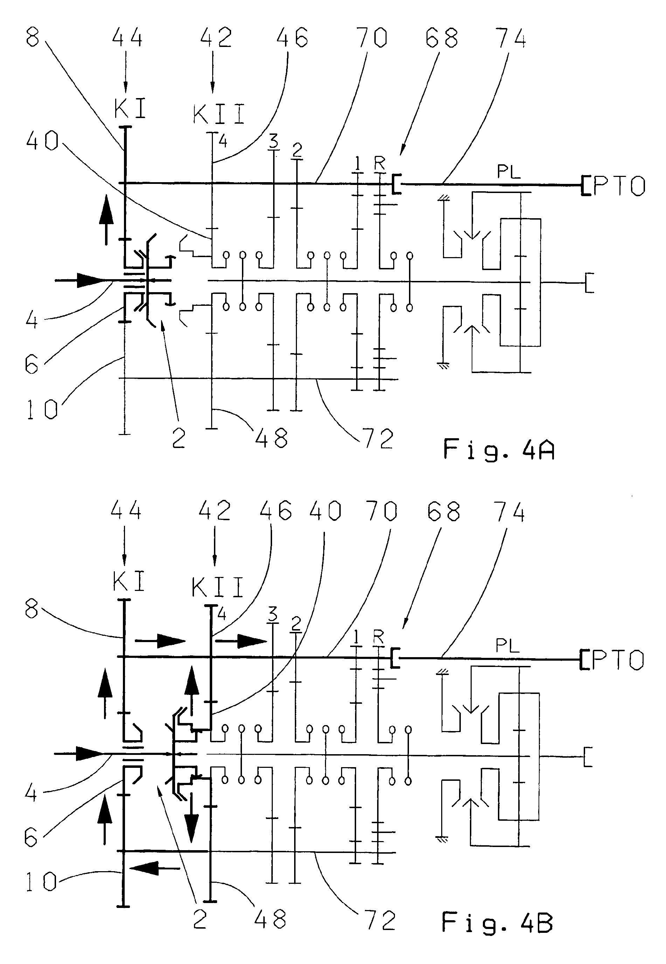

Die Fig. 1 zeigt eine Schalteinrichtung 2 für ein Getriebe mit einer Eingangswelle 4, auf der ein Zahnrad 6 des ersten Konstantenradzuges 44 drehbar angeordnet ist. Der erste Konstantenradzug 44 weist die Zahnräder 6, 8 und 10 auf (Fig. 4A). Das Zahnrad 6 ist in einem Nadellager 12 auf der Eingangswelle 4 gelagert. Eine Synchronisiereinrichtung 14 weist einen auf der Eingangswelle 4 drehfest angeordneten Synchronkörper 16 auf, auf dem eine Schiebemuffe 18 axial entlang der Drehachse der Eingangswelle 4 verschoben werden kann. Auf je einer Seite des Synchronkörpers 16 ist je ein Kupplungskörper 20 bzw. 22 und je ein Synchronring 24 bzw. 26 angeordnet. Der Kupplungskörper 22 weist zwei Mitnehmer-Nasen 28 auf, von denen in der Fig. 1 eine Mitnehmer-Nase 28 gezeigt ist. Diese Mitnehmer-Nasen 28 greifen jeweils durch einen Gleitstein 30 einer Oldham-Kupplung 32. Die Oldham-Kupplung 32 weist noch zwei weitere Gleitsteine 34 auf, die ebenso wie die Gleitsteine 30 mit der Kupplungsscheibe 36 der Oldham-Kupplung 32 zusammenwirken. Durch diese Gleitsteine 34 greifen Mitnehmer-Nasen 38 an einem Zahnrad 40 des zweiten Konstantenradzuges 42. Der zweite Konstantenradzug 42 weist die Zahnräder 40, 46 und 48 auf (Fig. 4A). Das Zahnrad 40 ist auf der Eingangswelle 4 zwischen zwei Wälzlagern 50 und 52 axial gelagert, weist aber in radialer Richtung Spiel auf.

In der Fig. 2 ist die Kupplungsscheibe 36 der Oldham-Kupplung nach dem Schnitt der Fig. 1 dargestellt. Dabei sind die Mitnehmer-Nasen 28 am Kupplungskörper 22 und die Mitnehmer-Nasen 38 am Zahnrad 40 in den Gleitsteinen 30 bzw. 34 gut erkennbar.

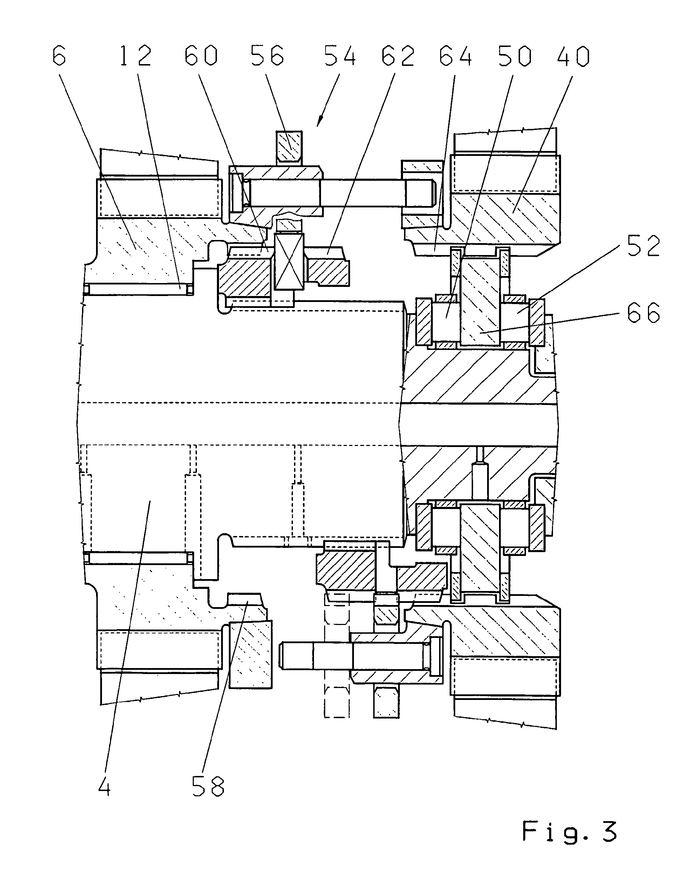

Eine Bolzensynchronisierung 54 wird in der Fig. 3 dargestellt. Auf der Eingangswelle 4 ist das Zahnrad 6 des ersten Konstantenradzuges 44 in einem Nadellager 12 drehbar angeordnet. Zur Verbindung von Zahnrad 6 und Eingangswelle 4 ist in der oberen Hälfte der Fig. 3 die Scheibe 56 der Bolzensynchronisierung 54 in der Zeichenebene nach links verschoben, so daß die Kupplungsverzahnung 58 am Zahnrad 6 und die Kupplungsverzahnung 60 an der Scheibe 56 ineinander eingreifen können. Das Zahnrad 40 ist zwischen den Wälzlagern 50 und 52 auf einer Scheibe 66 auf der Eingangswelle 4 axial gelagert, weist jedoch in radialer Richtung Spiel auf. Wird, wie in der unteren Hälfte der Fig. 3 dargestellt, die Scheibe 56 in der Zeichenebene nach rechts verschoben, so greifen die Kupplungsverzahnung 62 an der Scheibe 56 und die Kupplungsverzahnung 64 am Zahnrad 40 ineinander. Die Kupplungsverzahnung ist dabei so ausgebildet, daß ein Stellungsfehler-Ausgleich der Verzahnungen der Konstantenradzüge 42 und 44 stattfindet.

Die Fig. 4A zeigt den Drehmomentenfluß eines Getriebes 68 mit zwei Vorgelegewellen 70 und 72. Beim Einschalten des ersten Konstantenradzuges 44, der aus den Zahnrädern 6, 8 und 10 besteht, in die Drehmomentübertragung, fließt das Drehmoment von der Eingangswelle 4 über die Schalteinrichtung 2 auf das Zahnrad 6 und von dort über das Zahnrad 8 auf die Vorgelegewelle 70. Mit der Vorgelegewelle 70 ist über eine Zwischenwelle 74 ein Nebenabtrieb PTO (Power Take Off) verbunden. In der Fig. 4B ist das Einschalten des zweiten Konstantenradzuges 42, der aus den Zahnrädern 40, 46 und 48 besteht, in die Drehmomentübertragung gezeigt, wobei das Drehmoment von der Eingangswelle 4 über die Schalteinrichtung 2 zunächst auf das Zahnrad 40 fließt. Das Zahnrad 6 des ersten Konstantenradzuges 44 bildet durch seine radiale Lagerung im Nadellager 12 ein Koppelglied zwischen den beiden Vorgelegewellen 70 und 72 und ergibt dadurch eine formschlüssige Rückkopplung von der Vorgelegewelle 70, an der der Nebenabtrieb PTO angeschlossen ist, auf die gegenüberliegende und bisher unbelastete Vorgelegewelle 72. Infolge dieser Rückkopplung werden die Zahnkräfte des Zahnrades 40 des zweiten Konstantenradzuges 42 auf beide Vorgelegewellen 70 und 72 je zur Hälfte verteilt und über den ersten Konstantenradzug 44 wieder zurückgeführt auf die Vorgelegewelle 70. Damit steht an der Vorgelegewelle 70, an der der Nebenabtrieb PTO angeschlossen ist, das volle Drehmoment zur Verfügung. Der Drehmomentenfluß soll durch die verwendeten Pfeile angedeutet werden.

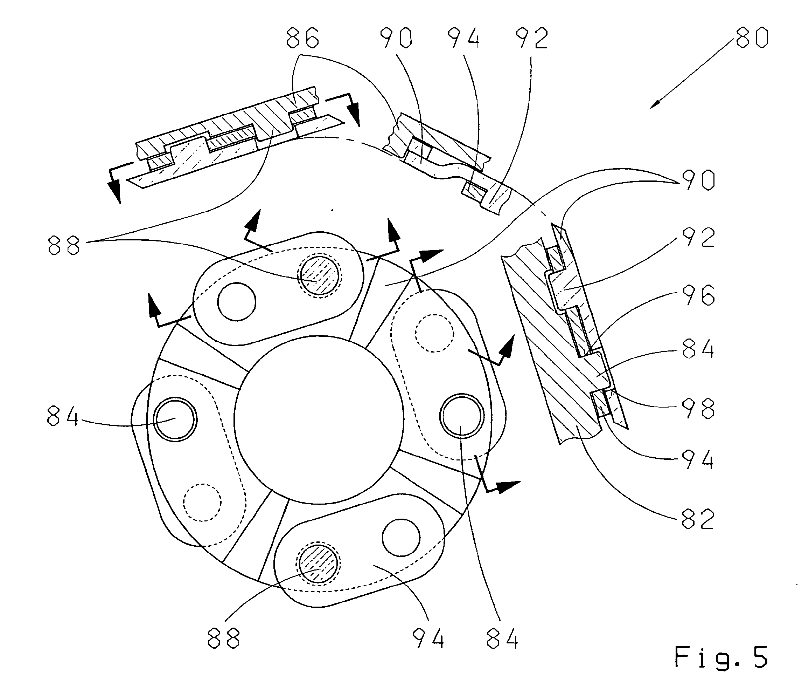

Die Fig. 5 zeigt ein Scheibengelenk 80. Ein Zahnrad 82 weist zwei gegenüberliegend angeordnete Mitnehmer-Nasen 84 auf. Jede Mitnehmer-Nase 84 greift durch jeweils eine Öffnung 96 eines mit zwei Öffnungen 96 versehenen Kettengliedes 94 und durch eine Öffnung 98 in einer Kupplungsscheibe 90 hindurch. In der Öffnung 98 ist die Mitnehmer-Nase 84 mit Spiel angeordnet. Die Kupplungsscheibe 90 weist Mitnehmer-Nasen 92 auf, die immer durch jeweils eine Öffnung 98 an einem Kettenglied 94 hindurchragen. Es sind vier Kettenglieder 94 vorgesehen. Ein Kupplungskörper 86 weist zwei gegenüberliegend angeordnete Mitnehmer-Nasen 88 auf. Jede Mitnehmer-Nase 88 greift durch jeweils die noch verbliebenen freie Öffnung 96 des Kettengliedes 94 und durch eine Öffnung 98 in einer Kupplungsscheibe 90 hindurch. In der Öffnung 98 ist die Mitnehmer-Nase 88 mit Spiel angeordnet. Das Zusammenwirken von Zahnrad 82, Kupplungsscheiben 90, Kettengliedern 94 und Kupplungskörper 86 erlaubt ein radiales Spiel des Zahnrades 82 auf einer hier nicht gezeigten Welle, die das Zahnrad 82 trägt.

### Bezugszeichen

- 2: Schalteinrichtung
- 4: Eingangswelle
- 6: Zahnrad
- 8: Zahnrad
- 10: Zahnrad
- 12: Nadellager
- 14: Synchronisiereinrichtung
- 16: Synchronkörper
- 18: Schiebemuffe
- 20: Kupplungskörper
- 22: Kupplungskörper
- 24: Synchronring
- 26: Synchronring
- 28: Mitnehmer-Nase
- 30: Gleitstein
- 32: Oldham-Kupplung
- 34: Gleitstein
- 36: Kupplungsscheibe
- 38: Mitnehmer-Nase
- 40: Zahnrad
- 42: Konstantenradzug
- 44: Konstantenradzug
- 46: Zahnrad
- 48: Zahnrad
- 50: Wälzlager
- 52: Wälzlager
- 54: Bolzensynchronisierung
- 56: Scheibe
- 58: Kupplungsverzahnung
- 60: Kupplungsverzahnung
- 62: Kupplungsverzahnung
- 64: Kupplungsverzahnung
- 66: Scheibe
- 68: Getriebe
- 70: Vorgelegewelle
- 72: Vorgelegewelle
- 74: Zwischenwelle
- 80: Scheibengelenk
- 82: Zahnrad
- 84: Mitnehmer-Nase
- 86: Kupplungskörper
- 88: Mitnehmer-Nase
- 90: Kupplungsscheibe
- 92: Mitnehmer-Nase
- 94: Kettenglied
- 96: Öffnung
- 98: Öffnung

- PTO: Nebenabtrieb

## Patentansprüche

1. Getriebe (68) mit Schalteinrichtung (2) und mit Lastverteilung auf zwei Vorgelegewellen (70, 72) mit einem ersten (44) und einem zweiten (42) Konstantenradzug, von denen wenigstens ein Konstantenradzug (42) der Übertragung von in das Getriebe (68) eingeleitetem Drehmoment auf diejenige Vorgelegewelle (70) dient, an der ein Nebenabtrieb (PTO) angeordnet ist, mit einem nicht auf einer der Vorgelegewellen (70, 72) angeordneten Zahnrad (40, 82) des zweiten Konstantenradzuges (42), das in radialer Richtung in einer Kupplungseinrichtung (32, 62, 64, 80) derart fixiert ist, dass die Kupplungseinrichtung (32, 62, 64, 80) ein radiales Spiel des Zahnrades (40, 82) in bezug auf die Welle (4) zuläßt, auf der das Zahnrad (40) angeordnet ist, und mit einer Synchronisiereinrichtung (14, 54), **dadurch gekennzeichnet, dass** die Kupplungseinrichtung (32, 62, 64, 80) zwischen der Synchronisiereinrichtung (14) und dem Zahnrad (40, 82) des zweiten Konstantenradzuges (42), das nicht auf einer der Vorgelegewellen (70, 72) angeordnet ist, vorgesehen ist.

2. Getriebe (68) nach Anspruch 1, **dadurch gekennzeichnet , dass** als Kupplungseinrichtung eine Kupplungseinrichtung nach Oldham-Bauart (32) vorgesehen ist.

3. Getriebe (68) nach Anspruch 2, **dadurch gekennzeichnet, dass** an dem Zahnrad (40) Mitnehmer-Nasen (38) vorgesehen sind, die in Gleitsteine (34) an der Kupplungseinrichtung (32) nach Oldham-Bauart eingreifen.

4. Getriebe (68) nach Anspruch 2 oder 3, **dadurch gekennzeichnet , dass** an einem Kupplungskörper (22) der Synchronisiereinrichtung (14) Mitnehmer-Nasen (28) angeordnet sind, die in Gleitsteine (30) an der Kupplungseinrichtung (32) nach Oldham-Bauart eingreifen.

5. Getriebe (68) nach Anspruch 1, **dadurch gekennzeichnet , dass** zwischen der Synchronisiereinrichtung (14) und dem Zahnrad (82) des zweiten Konstantenradzuges (42), das nicht auf einer der Vorgelegewellen (70, 72) angeordnet ist, ein Scheibengelenk (80) als Kupplungseinrichtung vorgesehen ist.

6. Getriebe (68) nach Anspruch 5, **dadurch gekennzeichnet, dass** an dem Zahnrad (82) Mitnehmer-Nasen (84) vorgesehen sind, die in Kettenglieder (94) und Kupplungsscheiben (90) an dem Scheibengelenk (80) eingreifen.

7. Getriebe (68) nach Anspruch 5 oder 6, **dadurch gekennzeichnet , dass** an einem Kupplungskörper (86) der Synchronisiereinrichtung (14) Mitnehmer-Nasen (88) angeordnet sind, die in Kettenglieder (94) und Kupplungsscheiben (90) an dem Scheibengelenk (80) eingreifen.

8. Getriebe (68) nach Anspruch 1, **dadurch gekennzeichnet , dass** als Synchronisiereinrichtung eine Bolzensynchronisierung (54) vorgesehen ist und die Kupplungsverzahnung (62, 64) zwischen der Bolzensynchronisierung (54) und dem Zahnrad (40) des zweiten Konstantenradzuges (42), das nicht auf einer der Vorgelegewellen (70, 72) angeordnet ist, derart ausgebildet ist, dass die Stellungsungenauigkeiten zwischen den Verzahnungen der ersten und zweiten Konstantenradzüge (44, 42) ausgeglichen werden.

9. Getriebe (68) nach einem der vorherigen Ansprüche, **dadurch gekennzeichnet , dass** das Zahnrad (6) des ersten Konstantenradzuges (44), das nicht auf einer der Vorgelegewellen (70, 72) angeordnet ist, auf der Eingangswelle (4) in einem Nadellager (12) gelagert ist.

## Claims

1. Transmission (68) having a shift device (2) and having load distribution to two layshafts (70, 72) having a first (44) and a second (42) constant gear train, of which at least one constant gear train (42) is used to transmit torque, which is introduced into the transmission (68), to the layshaft (70) on which a power take-off unit (PTO) is disposed, having a gear wheel (40, 82) of the second constant gear train (42) that is not disposed on one of the layshafts (70, 72) and is fixed in radial direction in a coupling device (32, 62, 64, 80) in such a way that the coupling device (32, 62, 64, 80) allows a radial play of the gear wheel (40, 82) in relation to the shaft (4), on which the gear wheel (40) is disposed, and having a synchronizing device (14, 54), **characterized in that** the coupling device (32, 62, 64, 80) is provided between the synchronizing device (14) and the gear wheel (40, 82) of the second constant gear train (42) that is not disposed on one of the layshafts (70, 72).

2. Transmission (68) according to claim 1, **characterized in that** an Oldham coupling (32) is provided as a coupling device.

3. Transmission (68) according to claim 2, **characterized in that** driver lugs (38) are provided on the gear wheel (40) and engage into slide blocks (34) on the Oldham coupling (32).

4. Transmission (68) according to claim 2 or 3, **characterized in that** driver lugs (28) are disposed on a coupling body (22) of the synchronizing device (14) and engage into slide blocks (30) on the Oldham coupling (32).

5. Transmission (68) according to claim 1, **characterized in that** a disk joint (80) is provided as a coupling device between the synchronizing device (14) and the gear wheel (82) of the second constant gear train (42) that is not disposed on one of the layshafts (70, 72).

6. Transmission (68) according to claim 5, **characterized in that** driver lugs (84) are provided on the gear wheel (82) and engage into chain links (94) and coupling disks (90) on the disk joint (80).

7. Transmission (68) according to claim 5 or 6, **characterized in that** driver lugs (88) are disposed on a coupling body (86) of the synchronizing device (14) and engage into chain links (94) and coupling disks (90) on the disk joint (80).

8. Transmission (68) according to claim 1, **characterized in that** as a synchronizing device a pin synchronizing device (54) is provided and the dog teeth (62, 64) between the pin synchronizing device (54) and the gear wheel (40) of the second constant gear train that is not disposed on one of the layshafts (70, 72) are designed in such a way that positional inaccuracies between the teeth of the first and second constant gear trains (44, 42) are compensated.

9. Transmission (68) according to one of the preceding claims, **characterized in that** the gear wheel (6) of the first constant gear train (44) that is not disposed on one of the layshafts (70, 72) is mounted on the input shaft (4) in a needle bearing (12).

## Revendications

1. Boîte de vitesses (68) dotée d'un dispositif de changement de vitesses (2) et permettant une répartition des charges sur deux arbres de renvoi (70, 72) avec un premier (44) et un deuxième (42) trains de pignons de commande, desquels au moins un train de pignons de commande (42) sert à transmettre le couple appliqué à la boîte de vitesses (68) à l'arbre de renvoi (70), sur lequel est disposé une prise de mouvement (PTO), avec un engrenage (40, 82) du deuxième train de pignons de commande (42) pas disposé sur un des arbres de renvoi (70, 72), qui est fixé dans le sens radial dans un dispositif d'embrayage (32, 62, 64, 80) de manière à ce que le dispositif d'embrayage (32, 62, 64, 80) permet d'avoir au niveau de l'engrenage (40, 82) un jeu radial par rapport à l'arbre (4) sur lequel est disposé l'engrenage (40), et avec un dispositif de synchronisation (14, 54), **caractérisée en ce que** le dispositif d'embrayage (32, 62, 64, 80) est prévu entre le dispositif de synchronisation (14) et l'engrenage (40, 82) du deuxième train de pignons de commande (42), qui n'est pas disposé sur un des arbres de renvoi (70, 72).

2. Boîte de vitesses (68), selon la revendication 1, **caractérisée en ce que** le dispositif d'embrayage est un dispositif d'embrayage de type Oldham (32).

3. Boîte de vitesses (68) selon la revendication 2, **caractérisée en ce que** sur l'engrenage (40) sont prévus des tenons d'entraînement (38) qui engrènent dans les patins (34) du dispositif d'embrayage (32) de type Oldham.

4. Boîte de vitesses (68) selon la revendication 2 ou 3, **caractérisée en ce que** sur un anneau de crabotage (22) du dispositif de synchronisation (14) sont prévus des tenons d'entraînement (28) qui engrènent dans les patins (30) du dispositif d'embrayage (32) de type Oldham.

5. Boîte de vitesses (68) selon la revendication 1, **caractérisée en ce que** entre le dispositif de synchronisation (14) et l'engrenage (82) du deuxième train de pignons de commande (42), qui n'est pas disposé sur un des arbres de renvoi (70, 72), est prévu un accouplement à disques (80) servant de dispositif d'embrayage.

6. Boîte de vitesses (68) selon la revendication 5, **caractérisée en ce que** sur l'engrenage (82) sont prévus des tenons d'entraînement (84) qui engrènent dans des maillons (94) et disques d'embrayage (90) de l'accouplement à disques (80).

7. Boîte de vitesses (68) selon la revendication 5 ou 6, **caractérisée en ce que** sur un anneau de crabotage (86) du dispositif de synchronisation (14) sont disposés des tenons d'entraînement (88) qui engrènent dans des maillons (94) et disques d'embrayage (90) de l'accouplement à disques (80).

8. Boîte de vitesses (68) selon la revendication 1, **caractérisée en ce que** en tant que dispositif de synchronisation est prévue une synchronisation à boulons (54), et **en ce que** la denture de l'embrayage (62, 64) entre la synchronisation à boulons (54) et l'engrenage (40) du deuxième train à pignons de commande (42), qui n'est pas disposé sur un des arbres de renvoi (70, 72), est conçue de manière à ce que les irrégularités de positionnement entre les dentures des premiers et deuxièmes trains à pignons de commande (44, 42) sont compensées.

9. Boîte de vitesses (68) selon une des revendications précédentes, **caractérisée en ce que** l'engrenage (6) du premier train à pignons de commande (44), qui n'est pas disposé sur un des arbres de renvoi (70, 72), est logé dans un roulement à aiguilles (12) sur l'arbre d'entrée (4).
